(19) Europäisches Patentamt
European Patent Office
Office européen des brevets

(11) EP 4 318 092 A1

(12) EUROPEAN PATENT APPLICATION
published in accordance with Art. 153(4) EPC

(43) Date of publication:
**07.02.2024 Bulletin 2024/06**

(21) Application number: **22781228.6**

(22) Date of filing: **31.03.2022**

(51) International Patent Classification (IPC):
***G02C 7/00*** (2006.01) ***C09K 3/18*** (2006.01)
***G02B 1/18*** (2015.01) ***G02B 5/22*** (2006.01)

(52) Cooperative Patent Classification (CPC):
**C09K 3/18; G02B 1/18; G02B 5/22; G02C 7/00**

(86) International application number:
**PCT/JP2022/016492**

(87) International publication number:
**WO 2022/211018 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061557**

(71) Applicant: **Hoya Lens Thailand Ltd.**
**Pathumthani 12130 (TH)**

(72) Inventors:
- **HOSHI, Yuji**
**Tokyo 160-8347 (JP)**
- **KOJIMA, Kenji**
**Tokyo 160-8347 (JP)**

(74) Representative: **Kraus & Lederer Patentanwälte PartGmbB**
**Thomas-Wimmer-Ring 15**
**80539 München (DE)**

(54) **SPECTACLE LENS**

(57) Provided is a spectacle lens having antifogging properties, excellent light resistance, and little change in color, the spectacle lens including: a substrate; and a water-absorbent antifogging layer provided as an outermost layer on the substrate, wherein the water-absorbent antifogging layer contains an ultraviolet absorber, and the water-absorbent antifogging layer has spectral characteristics in which a light transmittance at least at 350 to 370 nm is less than 5%, and a wavelength at which the light transmittance is 5% or more is 370 nm or more.

*FIG. 1*

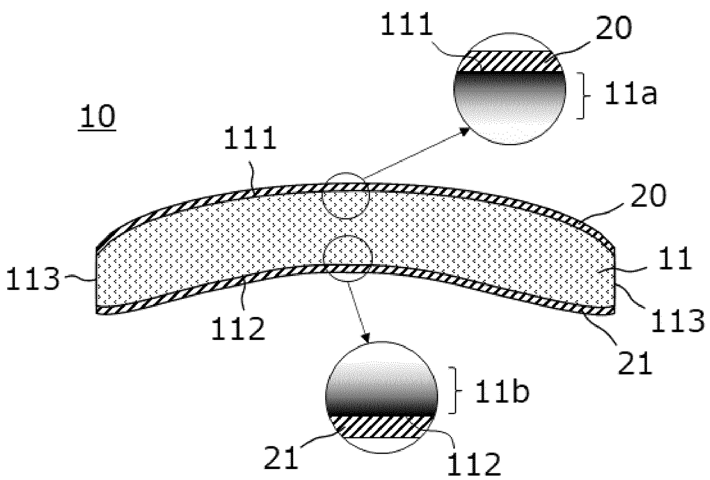


EP 4 318 092 A1

## Description

### Technical Field

The present disclosure relates to a spectacle lens.

### Background Art

In order to prevent fogging of a spectacle lens, it has been proposed to provide an antifogging layer on a lens substrate. For example, Patent Literature 1 describes that an antifogging layer including a water absorbing layer is provided in a spectacle lens.

On the other hand, in consideration of long-time use of the spectacle lens in various environments, there has been a demand for providing a highly durable antifogging layer capable of saving the trouble of periodically forming the antifogging layer again. For this reason, it is conceivable that an antifogging layer having both water absorbency and water repellency is formed by blending a water absorbing component and a lubricating component, thereby imparting scratch resistance and low friction resistance to the antifogging layer.

When such functions are imparted to the antifogging layer, the durability of the antifogging layer increases, and as a result, light resistance is also required for the antifogging layer. Therefore, it is conceivable to suppress photodegradation of the antifogging layer by blending an ultraviolet absorber in the antifogging layer. Patent Literature 1 describes that it is preferable to blend an ultraviolet absorber in the water absorbing layer when deterioration of the substrate is concerned.

### Citation List

#### Patent Literature

Patent Literature 1: WO 2013/005710 A

### Summary of Invention

#### Technical Problem

However, it has been found that, in a case where the ultraviolet absorber is simply blended in a spectacle lens having an antifogging layer with high durability as described above, there is a problem that the temporal change in luminous transmittance and color of such a spectacle lens occurs upon receiving light irradiation. This problem is remarkable when the lens substrate is dyed in an achromatic color such as gray.

In view of the above problems, an object of the present disclosure is to provide a spectacle lens having antifogging properties, excellent light resistance, and little change in color.

#### Solution to Problem

As a result of intensive studies to solve the above problem, the present inventors have found that the above problem can be solved by inclusion of an ultraviolet absorber having specific characteristics in a water-absorbent antifogging layer, and have completed the present disclosure.

That is, the present disclosure provides the following [1] to [7] .

[1] A spectacle lens including: a substrate; and a water-absorbent antifogging layer provided as an outermost layer on the substrate, wherein

the water-absorbent antifogging layer contains an ultraviolet absorber, and
the water-absorbent antifogging layer has spectral characteristics in which a light transmittance at least at 350 to 370 nm is less than 5%, and a wavelength at which the light transmittance is 5% or more is 370 nm or more.

[2] The spectacle lens according to [1], wherein the water-absorbent antifogging layer is formed of a cured film of a coating composition containing the following components (A) to (C):

Component (A): a (meth)acrylic resin (A) having a constituent unit derived from a monomer (a-1) represented by the following general formula (1), a constituent unit derived from a monomer (a-2) represented by the following

general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

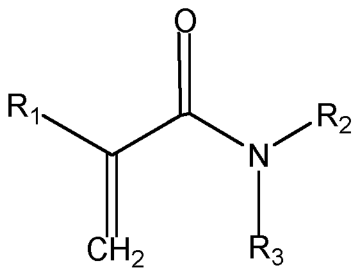
(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 2]

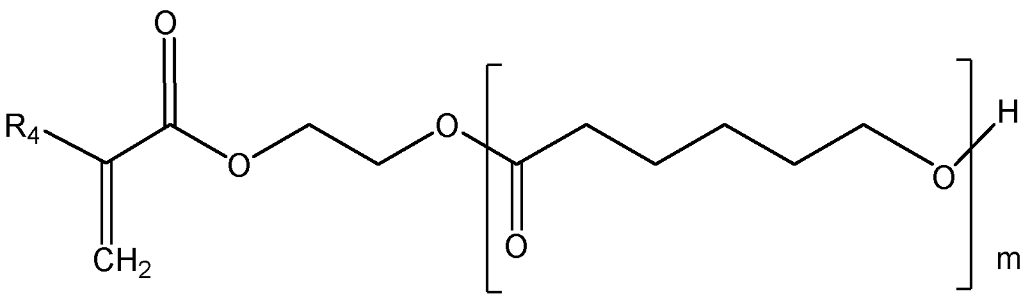
(2)

wherein $R_4$ is a hydrogen atom or a methyl group, and m is an integer of 1 to 5, and

[Chemical Formula 3]

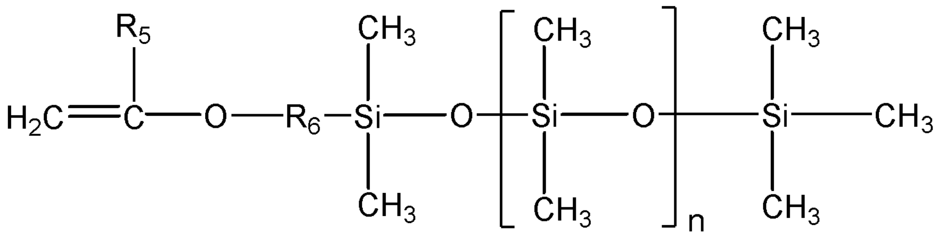
(3)

wherein $R_5$ is a hydrogen atom or a methyl group, $R_6$ is a divalent organic group, and n is 0 or an integer of 1 or more.

[3] The spectacle lens according to [1] or [2], wherein the ultraviolet absorber contains a compound represented by the following general formula (4):

[Chemical Formula 4]

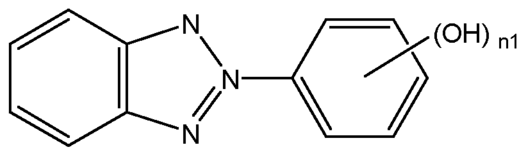

(4)

wherein n1 is 2 or 3.

[4] The spectacle lens according to [1] or [2], wherein the ultraviolet absorber contains a compound represented by the following general formula (5):

[Chemical Formula 5]

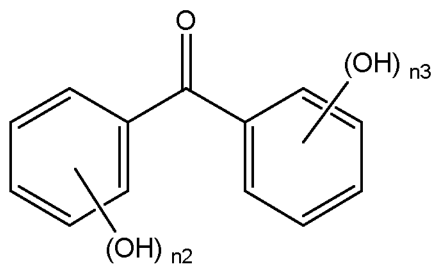

(5)

wherein n2 is 2 or 3, and n3 is 2 or 3.

[5] The spectacle lens according to any one of [1] to [4], wherein the substrate is dyed with a colorant.

[6] The spectacle lens according to [5], wherein the substrate is dyed in gray.

[7] The spectacle lens according to any one of [1] to [6], wherein the substrate is made of resin.

Advantageous Effects of Invention

According to the present disclosure, it is possible to provide a spectacle lens that has antifogging properties, excellent light resistance, and little change in color.

Brief Description of Drawings

Fig. 1 is a schematic cross-sectional view and a partially enlarged view of a spectacle lens 10.

Description of Embodiments

Hereinafter, embodiments and examples of the present disclosure will be described. The same or corresponding parts are denoted by the same reference numerals, and the description thereof may not be repeated. In the embodiments and examples described below, when referring to the number, amount, and the like, the scope of the present disclosure is not necessarily limited to the number, amount, and the like unless otherwise specified. In the following embodiments, each component is not necessarily essential to the embodiments and examples of the present disclosure unless otherwise specified.

In the notation of the group (atomic group) in the present specification, the notation that does not indicate whether it is substituted or unsubstituted includes both groups having no substituent and groups having a substituent. For example, the "alkyl group" includes an alkyl group having no substituent (unsubstituted alkyl group) and an alkyl group having a substituent (substituted alkyl group).

The notation "(meth)acryl" in the present specification represents a concept including both acryl and methacryl. The same applies to similar notations such as "(meth)acrylate".

In the present specification, the constituent unit derived from the monomer (a-1) may be referred to as a "constituent unit (a-1)", the constituent unit derived from the monomer (a-2) as a "constituent unit (a-2)", the constituent unit derived from the monomer (a-3) as a "constituent unit (a-3)", and the constituent unit derived from the monomer (a-4) as a "constituent unit (a-4)".

[Spectacle lens]

The spectacle lens according to an embodiment of the present disclosure includes: a substrate; and a water-absorbent antifogging layer provided as an outermost layer on the substrate, wherein the water-absorbent antifogging layer contains an ultraviolet absorber, and the water-absorbent antifogging layer has spectral characteristics in which a light transmittance at least at 350 to 370 nm is less than 5%, and a wavelength at which the light transmittance is 5% or more is 370 nm or more.

Fig. 1 is a schematic cross-sectional view and a partially enlarged view of the spectacle lens 10 which is an example of a spectacle lens. The configuration of the spectacle lens 10 will be described with reference to Fig. 1. The spectacle lens 10 includes a lens body. The lens body is constituted by a lens substrate 11 described later.

As illustrated in Fig. 1, the spectacle lens 10 includes a spectacle lens substrate 11 (hereinafter also simply referred to as "lens substrate") which is a substrate constituting the lens body. The lens substrate 11 has a first main surface 111, a second main surface 112, and an edge surface 113. A water-absorbent antifogging layer 20 is provided on the first main surface 111 of the lens substrate 11. A water-absorbent antifogging layer 21 is also provided on the second main surface 112 of the lens substrate 11.

The water-absorbent antifogging layers 20 and 21 are the outermost layers of the spectacle lens 10, and the water-absorbent antifogging layers 20 and 21 are exposed to the external space.

As illustrated in the partially enlarged view of Fig. 1, in the lens substrate 11, a dyed layer 11a is formed near the first main surface 111, and a dyed layer 11b is formed near the second main surface 112.

The dyed layers 11a and 11b are layers dyed with a predetermined dye. When the lens substrate has the dyed layers, the spectacle lens can be colored in any color (for example, gray).

The water-absorbent antifogging layer may be provided only on one of the main surfaces. For example, only the water-absorbent antifogging layer 20 on the first main surface 111 in Fig. 1 may be provided, or only the water-absorbent antifogging layer 21 on the second main surface 112 in Fig. 1 may be provided.

In addition, a colorant may be mixed with a raw material for forming the lens substrate to disperse the dye in the entire lens substrate.

When the spectacle lens includes an antifogging layer having both water absorbency and water repellency, such as a cured product of a coating composition described later, scratch resistance and low friction resistance are imparted in addition to excellent antifogging properties. In addition, since the antifogging layer contains an ultraviolet absorber having specific physical properties, the antifogging layer has excellent light resistance, excellent light resistance, and has little change in color even when the spectacle lens is used for a long period of time. Therefore, even if the lens substrate is dyed, and particularly colored in an achromatic color such as gray, the color hardly changes.

<Lens substrate>

The lens substrate is, for example, a spectacle lens substrate. The lens substrate is preferably made of resin. The lens substrate may be dyed with a colorant as described above, and for example, may be dyed in gray.

Examples of the resin constituting the lens substrate include a polycarbonate resin, a urethane urea resin, an acrylic allyl resin, a (thio)urethane resin, a polysulfide resin, a polyamide resin, and a polyester resin. The (thio)urethane resin means at least one selected from a thiourethane resin and a urethane resin. Among them, a (thio)urethane resin, a polycarbonate resin, and a polysulfide resin are preferable.

In addition, the lens substrate used for the spectacle lens of the present embodiment is preferably a plastic lens substrate having a refractive index of 1.50 or more, and more preferably a plastic lens substrate having a refractive index of 1.60 or more.

Preferable commercially available products of the plastic lens substrate include an allyl polycarbonate-based plastic lens "HILUX 1.50" (manufactured by HOYA Corporation, refractive index 1.50), a thiourethane-based plastic lens "MERIA" (manufactured by HOYA Corporation, refractive index 1.60), a thiourethane-based plastic lens "EYAS" (manufactured by HOYA Corporation, refractive index 1.60), a thiourethane-based plastic lens "EYNOA" (manufactured by HOYA Corporation, refractive index 1.67), a polysulfide-based plastic lens "EYRY" (manufactured by HOYA Corporation, refractive index 1.70), and a polysulfide-based plastic lens "EYVIA" (manufactured by HOYA Corporation, refractive index 1.74).

(Colorant)

The colorant for dyeing the lens substrate is used by being added to a solution for performing a dyeing treatment on the lens substrate.

Examples of the colorant for dyeing the substrate include dyes such as disperse dyes and oil-soluble dyes, and pigments. These dyes and pigments may be used singly or in combination of two or more kinds thereof.

When the substrate is colored in gray, a change in color due to yellowing is easily felt by human eyes. In such a case, the effect of suppressing yellowing by providing the water-absorbent antifogging layer is remarkable. Examples of the dye that colors the substrate in gray include an azo-based disperse dye and an anthraquinone-based disperse dye.

<Size and optical properties and the like of substrate>

The thickness and diameter of the substrate are not particularly limited. The thickness is usually about 1 to 30 mm, and the diameter is usually about 50 to 100 mm.

The refractive index ne of the substrate is preferably 1.50 or more, more preferably 1.53 or more, still more preferably 1.55 or more, still even more preferably 1.58 or more, still even more preferably 1.60 or more, particularly preferably 1.67 or more, and preferably 1.80 or less, more preferably 1.70 or less.

The lens substrate may be either a finish lens or a semi-finish lens.

The surface shape of the lens substrate is not particularly limited, and may be any of a flat surface, a convex surface, a concave surface, or the like.

The spectacle lens of the present disclosure may be any of a single focal lens, a multifocal lens, a progressive addition lens, or the like. In a progressive addition lens, usually, a near vision region (near portion) and a progressive region (intermediate region) are included in a lower region described above, a distance vision region (distance portion) is included in an upper region.

<Water-absorbent antifogging layer>

The water-absorbent antifogging layer is located in the outermost layer of the spectacle lens, and has spectral characteristics in which the light transmittance at least 350 to 370 nm is less than 5%, and the wavelength at which the light transmittance is 5% or more is 370 nm or more.

The water-absorbent antifogging layer is located at the outermost layer of the spectacle lens, thereby preventing the spectacle lens from being fogged by moisture existing in the external environment. In addition, the water-absorbent antifogging layer having the above-described spectral characteristics suppresses ultraviolet rays contained in light traveling from the outside toward the spectacle lens from entering the lens substrate. When the spectacle lens is exposed to ultraviolet rays for a long time, such a water-absorbent antifogging layer can prevent yellowing of the water-absorbent antifogging layer as well as suppress discoloration of the dye applied to the lens substrate.

The water-absorbent antifogging layer has a spectral transmittance in which the light transmittance at least 350 to 370 nm is less than 5%, and the wavelength at which the light transmittance is 5% or more is preferably 375 nm or more, more preferably 380 nm or more, still more preferably 382 nm or more, and preferably 420 nm or less, more preferably 400 nm or less.

The light transmittance of the water-absorbent antifogging layer at a wavelength of less than 350 nm is preferably 1% or less.

The water-absorbent antifogging layer is a layer having water absorbency. Here, the term "water absorbency" means that the material exhibits a property of taking moisture therein. The term "water absorbency" specifically means that when a transparent substrate on which the antifogging layer is formed is stored at room temperature, and then the transparent substrate provided with the antifogging layer is placed at a position 35 mm away from the surface of hot water at 40°C, and exposed to vapor from the hot water for 15 seconds, there is no irregular reflection on the surface of the antifogging layer due to small water droplets, and there is no distortion due to condensation on an image viewed through the transparent substrate provided with the antifogging layer after the vapor is brought into contact with the transparent substrate.

The water-absorbent antifogging layer preferably has water repellent performance. Accordingly, the antifogging performance is further improved.

The water-absorbent antifogging layer is a single layer made of a resin material having water absorbency, and is preferably a single layer having a contact angle with water of 85° to 120°.

When the water-absorbent antifogging layer has the above-described properties, it is easy to impart properties such as scratch resistance, low friction resistance, and solvent resistance in addition to having water absorbency. As a result, the water-absorbent antifogging layer exhibits high durability even when located in the outermost layer of the spectacle lens.

The contact angle of the antifogging layer with water is represented by an angle formed between a water droplet and the surface of the antifogging layer 30 seconds after 20 μl of pure water droplet is dropped onto the surface of the flat antifogging layer to be measured and brought into contact with the surface at 20°C.

(Thickness of water-absorbent antifogging layer)

The thickness of the water-absorbent antifogging layer is preferably 1 to 100 μm, more preferably 3 to 60 μm, still more preferably 6 to 50 um, still even more preferably 8 to 40 um, still even more preferably 8 to 40 μm, and still even more preferably 12 to 30 um from the viewpoint of ease of production.

The thickness of the water-absorbent antifogging layer is preferably 1 um or more, more preferably 3 um or more, still more preferably 6 um or more, still even more preferably 8 um or more, and still even more preferably 12 um or more from the viewpoint of improving antifogging properties. The thickness of the water-absorbent antifogging layer is preferably 100 um or less, more preferably 60 um or less, still more preferably 50 um or less, still even more preferably 40 um or less, and still even more preferably 30 um or less from the viewpoint of ease of production.

(Coating composition)

The water-absorbent antifogging layer is preferably a cured film of a coating composition containing a constituent unit derived from a siloxane compound and a constituent unit derived from acrylamide.

When the water-absorbent antifogging layer has a constituent unit derived from a siloxane compound, the slipperiness of the water-absorbent antifogging layer is improved. As a result, the scratch resistance of the water-absorbent antifogging layer is improved. In addition, when the water-absorbent antifogging layer has an amide group derived from acrylamide, the hydrophilicity of the water-absorbent antifogging layer is increased. This improves water absorption performance, and as a result, improves antifogging properties.

The water-absorbent antifogging layer is preferably formed of a cured film of a coating composition containing the following components (A) to (C):

Component (A): a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 6]

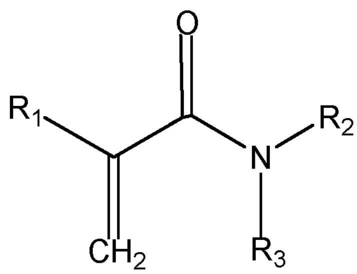

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 7]

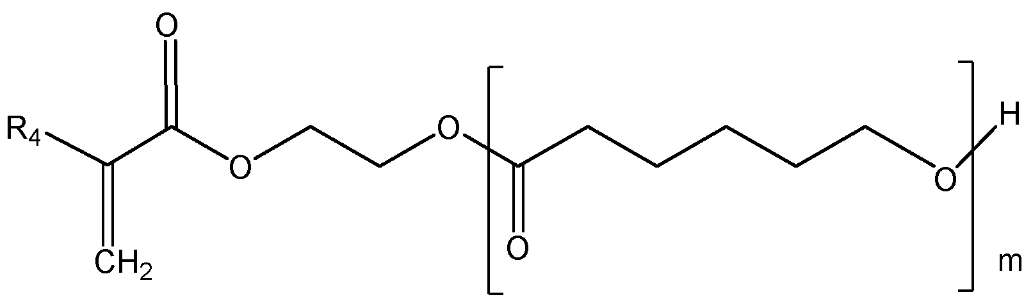

(2)

wherein $R_4$ is a hydrogen atom or a methyl group, and m is an integer of 1 to 5, and

[Chemical Formula 8]

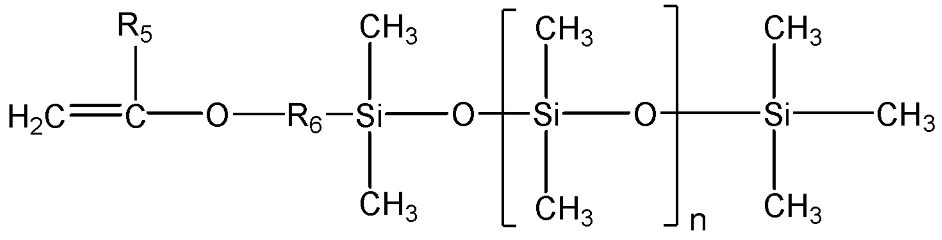

(3)

wherein $R_5$ is a hydrogen atom or a methyl group, $R_6$ is a divalent organic group, and n is 0 or an integer of 1 or more.

The constituent unit (a-1) contained in the resin (A) (also referred to as a (meth)acrylic resin) has an amide group, is highly hydrophilic, and easily retains moisture therein. It is therefore considered that moisture adhering to the surface of the water-absorbent antifogging layer obtained by curing the coating composition is easily absorbed into the cured film. In addition, it is considered that by blending the polyol compound (B), a gap for sufficiently absorbing moisture can be present while maintaining the crosslinking density required as a water-absorbent antifogging layer. For these reasons, it is considered that antifogging properties are imparted to the cured film of the coating composition.

The constituent unit (a-2) contained in the resin (A) is a constituent unit having a polycaprolactone structure, and contributes to improvement in flexibility and elasticity of the water-absorbent antifogging layer due to its flexible chemical skeleton. In addition, by containing the constituent unit (a-3) which is more rigid than the constituent unit (a-2), a balance between flexibility and elasticity is secured. On the other hand, the polydimethylsiloxane chain of the constituent unit (a-4) contributes to improvement in slipperiness with respect to the water-absorbent antifogging layer. Therefore, when an external force is applied to the water-absorbent antifogging layer, the above-described two effects of absorbing the external force by the flexibility and elasticity of the water-absorbent antifogging layer and releasing the external force to the outside of the water-absorbent antifogging layer by the slipperiness are synergistically exhibited. As a result, it is considered that the water-absorbent antifogging layer is less likely to be scratched.

In the coating composition, preferably, the proportion of the constituent unit derived from the monomer (a-1) is 20 mass% or more and 65 mass% or less, the proportion of the constituent unit derived from the monomer (a-2) is 10 mass% or more and 40 mass% or less, and the proportion of the constituent unit derived from the monomer (a-4) is 1 mass% or more and 10 mass% or less, with respect to 100 mass% of all the constituent units constituting the component (A). In the coating composition, the ratio (NCO)/(OH) of the number (NCO) of isocyanate groups contained in the component (C) to the total amount (OH) obtained by adding the number of hydroxyl groups contained in the component (A) and the number of hydroxyl groups contained in the component (B) is preferably 0.15 or more and 0.55 or less.

It is considered that when the composition of the coating composition is as described above, the equivalent ratio (NCO/OH) is set to a specific range smaller than 1 while maintaining the balance (amount ratio) between the constituent unit (a-2) and the constituent unit (a-3) having a hydroxyl group in the component (A), so that the hardness of the water-absorbent antifogging layer can be increased to an extent that the friction resistance is improved. In addition, it is considered that the equivalent ratio (NCO/OH) is set to a specific range smaller than 1 while maintaining the structural balance between the constituent unit (a-2) and the constituent unit (a-3) having a hydroxyl group in the component (A), so that the crosslinking density of the water-absorbent antifogging layer is increased, and the solvent resistance of the water-absorbent antifogging layer is improved.

The components contained in the coating composition of the present embodiment will be described below.

(Component (A): (meth)acrylic resin)

The coating composition of the present embodiment preferably contains a (meth)acrylic resin as the component (A), that is, a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3) .

As described above, it is considered that the constituent unit (a-1) is mainly involved in the absorption of water (moisture).

The (meth)acrylic resin can be typically obtained by polymerizing the monomer (a-1), the monomer (a-2), the monomer (a-3), and the monomer (a-4). Details of the polymerization method will be described later.

In the present embodiment, 100% of the constituent units constituting the (meth)acrylic resin need not be a constituent unit derived from a (meth)acrylic monomer. That is, the (meth)acrylic resin may partially (but not entirely) contain a constituent unit derived from a monomer other than a (meth)acrylic monomer.

In order to obtain the effect derived from the (meth)acrylic structure sufficiently, 50 mass% or more of all the constituent units of the (meth)acrylic resin is preferably a constituent unit derived from a (meth)acrylic monomer. More preferably, 80 mass% or more of all the constituent units of the (meth)acrylic resin is a constituent unit derived from a (meth)acrylic monomer. Still more preferably, all (100%) constituent units of the (meth)acrylic resin are a constituent unit derived from a (meth)acrylic monomer.

The monomer (a-1) is not particularly limited as long as the monomer has the structure of the general formula (1) described above. Specific examples thereof include (meth)acrylamide, N-methylacrylamide, N,N-dimethyl (meth)acrylamide, N-ethyl (meth)acrylamide, N,N-diethyl (meth)acrylamide, N-n-propyl (meth)acrylamide, and N-isopropyl (meth)acrylamide.

At least one kind of the monomer (a-1) may be used, and two or more kinds thereof may be used in combination. For example, a (meth)acrylic resin may be obtained by performing a polymerization reaction using two or more kinds of the monomers listed above.

The monomer (a-1) particularly preferably contains N,N-dimethyl (meth)acrylamide or N,N-diethyl (meth)acrylamide from the viewpoint of improving antifogging performance.

In the present embodiment, the content of the constituent unit derived from the monomer (a-1) in the (meth)acrylic resin is preferably 20 to 65 mass% with respect to the total amount of all the constituent units of the resin. The content is more preferably 35 to 60 mass%, and still more preferably 40 to 55 mass%. When the content of the constituent unit derived from the monomer (a-1) is 20 mass% or more, a water-absorbent antifogging layer exhibiting antifogging performance suitable for practical use is easily formed. When the content of the constituent unit derived from the monomer (a-1) is 65 mass% or less, the ratio of constituent units derived from other monomers is prevented from being relatively decreased, making it easy to maintain the balance of the entire composition.

The monomer (a-2) is not particularly limited as long as the monomer has the structure of the general formula (2) .

In the present embodiment, the (meth)acrylic resin contains the constituent unit derived from the monomer (a-2) in an amount of preferably 10 to 40 mass%, more preferably 20 to 38 mass%, and still more preferably 25 to 35 mass% with respect to the total amount of all the constituent units of the resin.

When the content of the constituent unit derived from the monomer (a-2) is 10 mass% or more, the flexibility of the water-absorbent antifogging layer is easily secured, and when the content is 40 mass% or less, the elasticity of the water-absorbent antifogging layer is easily secured.

The (meth)acrylic resin may contain a plurality of types of repeating units derived from the monomer (a-2).

The monomer (a-3) is a hydroxyalkyl (meth)acrylate. Specific examples of the hydroxyalkyl (meth)acrylate include hydroxyethyl (meth)acrylate, hydroxypropyl (meth)acrylate, and hydroxybutyl (meth)acrylate. In the present embodiment, among these, hydroxyethyl (meth)acrylate is preferable.

In the present embodiment, the content of the constituent unit derived from the monomer (a-3) in the (meth)acrylic resin is preferably 1 to 30 mass%, more preferably 2 to 20 mass%, and still more preferably 3 to 15 mass% with respect to the total amount of all the constituent units of the (meth)acrylic resin.

The monomer (a-3) has a hydroxyl group as with the monomer (a-2), and undergoes a crosslinking reaction with a polyfunctional isocyanate compound described later to form a water-absorbent antifogging layer.

In the present embodiment, the monomer (a-2) is subjected to a crosslinking reaction with a polyfunctional isocyanate compound together with the monomer (a-3) instead of subjecting only the monomer (a-2) to a crosslinking reaction to form a water-absorbent antifogging layer, thereby yielding a water-absorbent antifogging layer having various physical properties.

As described above, since the (meth)acrylic resin contains the constituent unit derived from the monomer (a-2) and the constituent unit derived from the monomer (a-3), the (meth)acrylic resin has a hydroxyl group as a whole, that is, has a hydroxyl value. Therefore, the (meth)acrylic resin can form a crosslinked structure by being reacted with a polyfunctional isocyanate compound described later together with a polyol compound described later.

The hydroxyl value of the (meth)acrylic resin is preferably 40 to 150 mgKOH/g, more preferably 70 to 140 mgKOH/g, and still more preferably 90 to 130 mgKOH/g.

Within this numerical range, the (meth)acrylic resin reacts with a polyfunctional isocyanate compound (described later) together with a polyol compound (described later), so that the crosslinked structure is easily controlled appropriately. Therefore, the water-absorbent antifogging layer can be hardened while maintaining the flexibility and elasticity of the water-absorbent antifogging layer. Therefore, it is easy to achieve a higher level of compatibility between the scratch resistance, reduction in friction resistance, and solvent resistance of the water-absorbent antifogging layer.

The hydroxyl value means the number of mg of potassium hydroxide required to neutralize acetic acid bonded to a hydroxyl group when 1 g of a sample is acetylated.

The monomer (a-4) is not particularly limited as long as the monomer has the structure of the general formula (3) .

The (meth)acrylic resin may contain a plurality of types of repeating units derived from the monomer (a-4). For example, a (meth)acrylic resin may be obtained by performing a polymerization reaction using two or more kinds of the monomers listed above.

In the present embodiment, the content of the constituent unit derived from the monomer (a-4) in the (meth)acrylic resin is preferably 1 to 10 mass%, more preferably 2 to 8 mass%, and still more preferably 3 to 7 mass% with respect to the total amount of all the constituent units of the resin.

When the content of the constituent unit derived from the monomer (a-4) is 1 mass% or more, a water-absorbent antifogging layer that satisfies scratch resistance is easily obtained. When the content is 10 mass% or less, a homogeneous resin (A) is easily synthesized.

The (meth)acrylic resin may or may not include any constituent unit (constituent unit (a-5)) other than the constituent unit (a-1), the constituent unit (a-2), the constituent unit (a-3), and the constituent unit (a-4). Examples of the constituent unit (a-5) include constituent units derived from monomers represented below. By including such a constituent unit in the (meth)acrylic resin, the glass transition temperature of the (meth)acrylic resin and the physical properties (hardness, softness, and the like of the water-absorbent antifogging layer) of the water-absorbent antifogging layer can be adjusted and optimized.

Examples of the constituent unit (a-5) include constituent units derived from a monomer represented by the general formula CH2=CR-COO-R' where R is a hydrogen atom or a methyl group, and R' is an alkyl group, a monocyclic or polycyclic cycloalkyl group, an aryl group, or an aralkyl group.

Specific examples of the monomer include methyl (meth)acrylate, ethyl (meth)acrylate, n-butyl (meth)acrylate, isobutyl (meth)acrylate, tert-butyl (meth)acrylate, 2-ethylhexyl (meth)acrylate, isodecyl (meth)acrylate, n-lauryl (meth)acrylate, n-stearyl (meth)acrylate, phenyl (meth)acrylate, and benzyl (meth)acrylate.

Among them, a monomer in which R' is an alkyl group having 1 to 8 carbon atoms is preferable, a monomer in which R' is an alkyl group having 1 to 6 carbon atoms is more preferable, and a monomer in which R' is an alkyl group having 1 to 4 carbon atoms is still more preferable.

The (meth)acrylic resin may include a plurality of types of repeating units corresponding to the constituent unit (a-5). For example, a (meth)acrylic resin may be obtained by performing a polymerization reaction using two or more kinds of the monomers listed above as specific examples.

When the (meth)acrylic resin contains the constituent unit (a-5), the content thereof is preferably 1 to 40 mass%, more preferably 3 to 30 mass%, and still more preferably 5 to 20 mass% with respect to the total amount of all the constituent units of the (meth)acrylic resin.

The mass average molecular weight (Mw) of the (meth)acrylic resin is not particularly limited, but is preferably 10,000 to 100,000, more preferably 20,000 to 70,000, and still more preferably 30,000 to 60,000. When the mass average molecular weight is 10,000 or more, it is easy to obtain desired antifogging performance, and when the mass average molecular weight is 100,000 or less, the coating composition tends to be excellent in coating suitability when applied to an object to be coated such as a spectacle lens.

The mass average molecular weight can be determined by gel permeation chromatography (GPC) using polystyrene as a standard substance.

The glass transition temperature of the (meth)acrylic resin is not particularly limited, but is preferably 20 to 120°C, more preferably 30 to 110°C, and still more preferably 35 to 100°C.

The glass transition temperature of the (meth)acrylic resin can be determined by various methods, and can be determined, for example, based on the following Fox's equation.

$$1/Tg = (W_1/Tg_1) + (W_2/Tg_2) + (W_3/Tg_3) + \ldots + (W_n/Tg_n)$$

wherein Tg represents the glass transition temperature (K) of the (meth) acrylic resin, $W_1$, $W_2$, $W_3$ ... $W_n$ each represent the mass fraction of each monomer, $Tg_1$, $Tg_2$, $Tg_3$ ... $Tg_n$ each represent the glass transition temperature (K) of a homopolymer composed of a monomer corresponding to the mass fraction of each monomer.

In the present specification, the glass transition temperature of the (meth)acrylic resin (not the glass transition temperature of the water-absorbent antifogging layer, but the glass transition temperature of the (meth)acrylic resin alone) means a glass transition temperature determined based on the above equation. Note that the glass transition temperature of a monomer whose glass transition temperature is unknown, such as special monomers or polyfunctional monomers is determined using only a monomer whose glass transition temperature is known.

The (meth)acrylic resin can be typically obtained by a polymerization reaction. The polymerization reaction may be performed by various methods such as radical polymerization, cationic polymerization, and anionic polymerization, and among them, radical polymerization is preferable. The polymerization may be any of solution polymerization, suspension polymerization, emulsion polymerization, and the like. Among them, solution polymerization is preferable from the viewpoint of precise control of polymerization and the like.

As the polymerization initiator for radical polymerization, a known polymerization initiator can be used. Examples of the polymerization initiator include azo-based initiators such as azobisisobutyronitrile, 2,2-azobis(2-methylbutyronitrile), 2,2-azobis(2-methylpropionitrile), and 2,2-azobis(2,4-dimethylvaleronitrile); peroxide-based initiators such as benzoyl peroxide, t-butyl peroxyoctanoate, diisobutyl peroxide, di(2-ethylhexyl)peroxypivalate, decanoyl peroxide, t-butyl peroxy-2-ethylhexanoate, and t-butyl peroxybenzoate; and redox-based initiators combining an oxidizing agent and a reducing agent, such as hydrogen peroxide and an iron(II) salt, and a persulfate and sodium bisulfite. These may be used singly or in combination of two or more kinds thereof.

The blending amount of the polymerization initiator is not particularly limited, but is preferably 0.001 to 10 parts by mass based on 100 parts by mass of the total amount of the mixed liquid of monomers to be polymerized.

In the polymerization reaction, a known chain transfer agent, a polymerization inhibitor, a molecular weight modifier, or the like may be appropriately used. Further, the polymerization reaction may be performed in one stage or in two or more stages. The temperature of the polymerization reaction is not particularly limited, but is typically in a range of 50°C to 200°C, preferably 80°C to 150°C.

(Component (B): polyol compound)

The coating composition of the present embodiment preferably contains a polyol compound. When the coating composition contains the polyol compound, the polyol compound reacts with the polyfunctional isocyanate compound described later together with the (meth)acrylic resin, making it possible to form a water-absorbent antifogging layer having more excellent antifogging durability. The number of hydroxyl groups of the polyol compound in one molecule is 2 or more, preferably 2 to 6, and more preferably 2 to 4.

The polyol compound preferably contains at least one or more polyol compounds selected from the group consisting of a polycaprolactone polyol, a polycarbonate polyol, and a polyether polyol. The chemical structures of these polyol compounds are moderately flexible and elastic. Therefore, such polyol compounds can further improve the flexibility and elasticity of the water-absorbent antifogging layer.

The polycaprolactone polyol can be used without particular limitation as long as it is a compound having a ring-opened structure of caprolactone and two or more hydroxyl groups in one molecule.

The polycarbonate polyol can be used without particular limitation as long as it is a compound having a carbonate group represented by -O-(C=O)-O- and two or more hydroxyl groups in one molecule. The polycarbonate polyol can be obtained by reacting one or more kinds of polyol raw materials (polyhydric alcohols) with a carbonate ester or phosgene.

The polyol raw material is not particularly limited, and examples thereof include aliphatic polyols, polyols having an alicyclic structure, and aromatic polyols. In the present embodiment, an aliphatic polyol having no alicyclic structure is preferable from the viewpoint of the flexibility of the cured film.

Examples of the carbonate ester include aliphatic carbonate esters such as dimethyl carbonate and diethyl carbonate; aromatic carbonate esters such as diphenyl carbonate; and cyclic carbonate esters such as ethylene carbonate. Among them, an aliphatic carbonate ester is preferable, and dimethyl carbonate is particularly preferable from the viewpoint of availability and ease of production.

The polyether polyol can be used without particular limitation as long as it is a compound having an ether bond (-O-) and two or more hydroxyl groups in one molecule.

Specific examples of the compound include polyether polyols obtained by addition polymerization of an alkylene oxide such as ethylene oxide, propylene oxide, or butylene oxide, using, as an initiator, a compound having two or more, preferably two or three active hydrogen groups, such as a low molecular weight polyol such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, bisphenol A, bis(β-hydroxyethyl)benzene, xylylene glycol, glycerin, trimethylolpropane, and pentaerythritol; or a low molecular weight polyamine such as ethylenediamine, propylenediamine, toluenediamine, meta-phenylenediamine, diphenylmethanediamine, and xylylenediamine; and polyether polyols obtained by ring-opening polymerization of a cyclic ether monomer including an alkyl glycidyl ether such as methyl glycidyl ether, an aryl glycidyl ether such as phenyl glycidyl ether, and tetrahydrofuran.

In the present embodiment, the polyol compound may be a compound corresponding to a plurality of polycaprolactone polyols, polycarbonate polyols, and polyether polyols. The polyol compound may be, for example, a polyether polyester polyol having an ether bond and an ester bond.

The polyol compound may also contain a plurality of types of polycaprolactone polyols, polycarbonate polyols, and polyether polyols.

The hydroxyl value of the polyol compound is preferably 50 to 500 mgKOH/g, more preferably 100 to 350 mgKOH/g, and still more preferably 150 to 250 mgKOH/g. By setting the amount of the hydroxyl group to an appropriate amount, the crosslinked structure formed by the reaction with the polyfunctional isocyanate compound described below is controlled, thus making it easy to improve the flexibility, elasticity, and the like of the water-absorbent antifogging layer.

In the present embodiment, the mass average molecular weight (Mw) of the polyol compound is preferably 450 to 2,500, more preferably 500 to 1,500, and still more preferably 500 to 700. By setting the molecular weight to an appropriate value, it is possible to more easily achieve both suppression of the change in appearance of the water-absorbent antifogging layer due to improvement in flexibility and elasticity and durability of the water-absorbent antifogging layer such as gasoline resistance, at a higher level.
The content of the polyol compound in the coating composition is preferably 5 to 200 parts by mass, more preferably 15 to 180 parts by mass, still more preferably 20 to 150 parts by mass, still even more preferably 20 to 100 parts by mass, still even more preferably 20 to 50 parts by mass, and still even more preferably 20 to 40 parts by mass with respect to 100 parts by mass of the (meth)acrylic resin. Within this numerical range, the performance derived from the polyol compound is easily obtained, and the balance with other components is easily achieved.
In the present embodiment, the polyol compound preferably contains a polycaprolactone polyol among the polycaprolactone polyol, the polycarbonate polyol, and the polyether polyol described above, and particularly preferably contains a polycaprolactone diol (a compound having a caprolactone structure and two hydroxyl groups) among polycaprolactone polyols.
This is because there is a tendency that the polycaprolactone diol as the polyol compound tends to have good compatibility with the (meth)acrylic resin as the component (A), which has the structure of the general formula (2) described above, that is, the caprolactone structure, and also tends to improve antifogging performance without excessively increasing the crosslinking density.

(Component (C): polyfunctional isocyanate compound)

The coating composition of the present embodiment preferably contains a polyfunctional isocyanate compound as the component (C). When the coating composition contains the polyfunctional isocyanate compound, the hydroxyl groups of the constituent unit (a-2) and the constituent unit (a-3) contained in the (meth)acrylic resin as the component (A) and the hydroxyl group of the polyol compound as the component (B), and the polyfunctional isocyanate compound cause a crosslinking reaction, so that a water-absorbent antifogging layer having excellent antifogging durability is obtained.
The polyfunctional isocyanate compound is a compound having two or more isocyanate groups (including isocyanate groups protected by a leaving group) in one molecule. Preferably, the number of functional groups of the polyfunctional isocyanate compound is more preferably 2 to 6 per molecule, and still more preferably 2 to 4 per molecule.
Examples of the polyfunctional isocyanate compound include aliphatic diisocyanates such as lysine isocyanate, hexamethylene diisocyanate, and trimethylhexane diisocyanate; cyclic aliphatic diisocyanates such as hydrogenated xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane; and tri- or higher functional isocyanates such as lysine triisocyanate.
As the polyfunctional isocyanate compound as the component (C), in addition to those described above, a multimer thereof such as a biuret type, an isocyanurate type, or an adduct type may be used. Among them, a biuret type polyfunctional isocyanate compound having moderate rigidity is preferable.
In the present embodiment, the content of the polyfunctional isocyanate compound in the coating composition is not particularly limited as long as it is blended according to the equivalent ratio (NCO)/(OH) described later. The content is usually 5 to 100 parts by mass, preferably 7 to 75 parts by mass, more preferably 10 to 60 parts by mass, still more preferably 10 to 50 parts by mass, still even more preferably 15 to 40 parts by mass, and still even more preferably 20 to 30 parts by mass with respect to 100 parts by mass of the (meth)acrylic resin. Within this numerical range, it is considered that necessary and sufficient crosslinking is performed in the water-absorbent antifogging layer.
The molar amount (that is, equivalent ratio (NCO)/(OH)) of the isocyanate groups (including a blocked isocyanate group) contained in the polyfunctional isocyanate compound to the hydroxyl groups contained in the (meth)acrylic resin and the polyol compound is preferably in a range of 0.15 to 0.55. When the equivalent ratio (NCO)/(OH) is within this range, the crosslinking density becomes sufficiently high, and as a result, functions such as antifogging properties and solvent resistance as a water-absorbent antifogging layer become sufficient.
From this viewpoint, the equivalent ratio (NCO)/(OH) is preferably 0.25 to 0.50 and more preferably 0.35 to 0.45.

(Form of coating composition)

The coating composition of the present embodiment may be a one-component type, that is, a state in which all components other than a solvent are substantially uniformly mixed (dissolved or dispersed) in the solvent. When the polyfunctional isocyanate compound is a blocked isocyanate, the one-component type is preferable.
As another aspect, the coating composition of the present embodiment may be a two-component type. By preparing the coating composition as a two-component type, the storage stability of the coating composition can be

improved.

For example, the coating composition of the present embodiment may be composed of (1) a liquid A containing a (meth)acrylic resin and/or a polyol compound but not containing a polyfunctional isocyanate compound, and (2) a liquid B containing a polyfunctional isocyanate compound but not containing a (meth)acrylic resin and a polyol compound. The liquid A and the liquid B may be stored in separate containers, and the liquid A and the liquid B may be mixed immediately before use (application).

In this case, components (additives and the like) other than the (meth)acrylic resin, the polyol compound, and the polyfunctional isocyanate compound may be contained in the liquid A, contained in the liquid B, or prepared in another container.

In particular, when the polyfunctional isocyanate compound is not a blocked isocyanate (that is, when the isocyanate group is present in the form of -NCO in the system), the coating composition is preferably a two-component type.

(Solvent)

The coating composition of the present embodiment may also contain a solvent. The use of the solvent makes it easy to adjust the viscosity and the solid content of the coating composition.

Examples of the solvent include aromatic hydrocarbon solvents such as toluene and xylene; alcohol solvents such as methanol, ethanol, isopropyl alcohol, n-butanol, t-butanol, isobutanol, and diacetone alcohol; ketone solvents such as acetone, methyl ethyl ketone, methyl isobutyl ketone, and cyclohexanone; ester solvents such as ethyl acetate, propyl acetate, butyl acetate, and isobutyl acetate; and glycol ether solvents such as propylene glycol monomethyl acetate, propylene glycol monomethyl ether, and propylene glycol monomethyl ether acetate.

Among them, t-butanol, diacetone alcohol, methyl ethyl ketone, ethyl acetate, and propylene glycol monomethyl ether acetate are preferable from the viewpoint of low reactivity with isocyanate, solubility, drying property, and the like.

The content of the solvent in the coating composition is preferably 20 to 90 mass%, more preferably 30 to 85 mass%, and still more preferably 35 to 80 mass% from the viewpoint of controlling the film thickness of the water-absorbent antifogging layer.

The solid content of the coating composition is preferably 5 mass% or more, more preferably 10 mass% or more, and still more preferably 15 mass% or more from the viewpoint of obtaining a spectacle lens having more excellent antifogging properties, and is preferably 50 mass% or less, more preferably 40 mass% or less, and still more preferably 30 mass% or less from the viewpoint of obtaining a spectacle lens having excellent appearance.

The total content of the components (A), (B) and (C) in the solid content of the coating composition is preferably 60 mass% or more, more preferably 80 mass% or more, still more preferably 90 mass% or more, still even more preferably 95 mass% or more, and preferably 100 mass% or less, for example, 100 mass% from the viewpoint of improving antifogging properties and scratch resistance.

The coating composition can be prepared by dissolving or dispersing each of the above components, an ultraviolet absorber, and other additives to be used as necessary in a solvent. Examples of such other additives include a curing catalyst, a light stabilizer, a surfactant, a leveling agent, and an antifoaming agent. The content of the additive is, for example, preferably 0.001 to 5 mass%, more preferably 0.01 to 4 mass%, and still more preferably 0.1 to 3 mass% with respect to the total mass of the coating composition.

Each component can be dissolved or dispersed in the solvent simultaneously or sequentially in any order. A specific dissolution or dispersion method is not particularly limited, and a known method can be adopted without any limitation.

(Ultraviolet absorber)

The ultraviolet absorber contained in the water-absorbent antifogging layer is an ultraviolet absorber that, when added to the water-absorbent antifogging layer, imparts, to the water-absorbent antifogging layer, a spectral transmittance in which the light transmittance at least 350 to 370 nm is less than 5%, and the wavelength at which the light transmittance is 5% or more is 370 nm or more.

When the water-absorbent antifogging layer contains the ultraviolet absorber, yellowing of the antifogging layer can be prevented when the spectacle lens is exposed to ultraviolet rays for a long time, and discoloration of the dye when the lens substrate is dyed can be suppressed.

Examples of the ultraviolet absorber include a compound represented by the following formula (4) and a compound represented by the following formula (5).

[Chemical Formula 9]

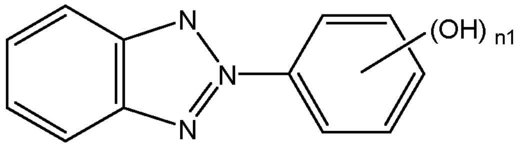

(4)

wherein n1 is 2 or 3.

[Chemical Formula 10]

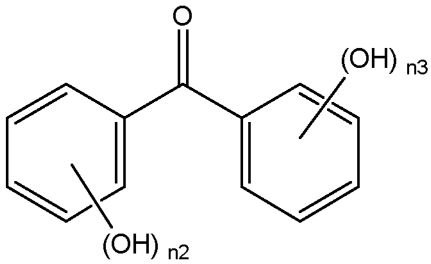

(5)

wherein n2 is 2 or 3, and n3 is 2 or 3.

In the compound represented by the formula (4), a plurality of hydroxy groups bonded to a benzene ring are preferably in the meta-position or para-position relationship with each other; at least one hydroxy group is preferably bonded to a carbon at the ortho-position with respect to a carbon to which a benzotriazole skeleton is bonded; a hydroxy group is more preferably each bonded to a carbon at the ortho-position and the para-position with respect to a carbon to which a benzotriazole skeleton is bonded; and it is more preferable that a hydroxy group is bonded to a carbon at the ortho-position with respect to a carbon to which a benzotriazole skeleton is bonded, and n1 is 2.

Specific examples of the compound represented by the formula (4) include 2-(2,4-dihydroxyphenyl)-2H-benzotriazole (CAS No. 22607-31-4).

In the compound represented by the formula (5), in each of the left and right benzene rings, a plurality of hydroxy groups bonded to the benzene ring are preferably in the meta-position or para-position relationship with each other; at least one hydroxy group is preferably bonded to a carbon at the ortho position with respect to a carbon to which a carbonyl group is bonded; a hydroxy group is more preferably bonded to a carbon at the ortho-position and the para-position with respect to a carbon to which a carbonyl group is bonded; and it is more preferable that a hydroxy group is bonded to a carbon at the ortho-position with respect to a carbon to which a carbonyl group is bonded, and both n2 and n3 are 2.

Specific examples of the compound represented by the formula (5) include 2,2',4,4'-tetrahydroxybenzophenone (CAS No. 131-55-5).

The ultraviolet absorber has high absorption performance on the long wavelength side. When used in the water-absorbent antifogging layer formed using the specific coating composition described above, the ultraviolet absorber exhibits high light resistance, can suppresses a change in the color of the spectacle lens having a water-absorbent antifogging layer, and particularly suppress yellowing of the spectacle lens colored in gray.

The use of 2-(2,4-dihydroxyphenyl)-2H-benzotriazole is advantageous in that the reactivity thereof is not excessively increased regardless of the type of monomer such as isocyanate, the ultraviolet absorbing effect is hardly reduced, and the pot life is hardly shortened.

The ultraviolet absorber may be used singly or in combination of two or more types thereof.

The content of the ultraviolet absorber in the coating composition is preferably 0.01 to 5 mass%, more preferably 0.1 to 4.5 mass%, and still more preferably 0.5 to 3 mass% with respect to the total mass of the coating composition from the viewpoint of at least one of protection of the lens substrate and the solubility of the ultraviolet absorber.

(Other additives)

The water-absorbent antifogging layer may contain additives other than the ultraviolet absorber. Examples of such other additives include an antistatic agent and an antioxidant.

The content of the other additive is, for example, preferably 0.001 to 5 mass%, more preferably 0.01 to 4

mass%, and still more preferably 0.1 to 3 mass% with respect to the total mass of the coating composition.

The ultraviolet absorber and additives other than the ultraviolet absorber can be blended in the water-absorbent antifogging film by adding these components to the coating composition to dissolve or disperse the components, and then applying the coating composition to the substrate to form a water-absorbent antifogging film.

<Other layers>

The spectacle lens may be provided with a functional layer other than the water-absorbent antifogging layer.

Examples of the functional layer include a hard coat layer, an antireflection layer, and a primer layer.

The functional layer may be provided on a first main surface of the lens substrate, may be provided on a second main surface of the lens substrate, or may be provided on both the first main surface and the second main surface of the lens substrate.

<Method for producing spectacle lens>

One aspect of the method for producing a plastic spectacle lens includes at least the following steps (1) to (3) :

· Step (1): preparing a lens substrate containing a polymer of a polymerizable composition;
· Step (2): applying a solution containing a colorant to the surface of the lens substrate to dye the lens substrate; and
· Step (3): forming a water-absorbent antifogging layer on at least one main surface of the dyed substrate.

Each of the steps will be described below.

(Step (1): preparation of lens substrate)

In step (1), a lens substrate containing a polymer of the polymerizable composition is prepared by polymerizing a polymerizable composition. Polymerization conditions for the polymerizable composition for an optical component can be appropriately set depending on the polymerizable composition.

The polymerization initiation temperature is preferably 0°C or higher, more preferably 10°C or higher, and preferably 50°C or lower, more preferably 40°C or lower. The temperature is raised from the polymerization initiation temperature, and then heating is preferably performed to perform curing formation. For example, the maximum temperature at heating is usually 110°C or higher and 130°C or lower.

After completion of the polymerization, the spectacle lens may be released from a die and may be annealed. The temperature of the annealing treatment is preferably 100 to 150°C.

The polymerization method is not particularly limited, and various known polymerization methods can be adopted, but a cast polymerization method is preferable. The spectacle lens is obtained, for example, by casting a polymerizable composition into a molding die combining glass or metal mold parts and a tape or gasket, and performing polymerization.

(Step (2): Dyeing treatment)

In the step (2), a solution containing a colorant is applied to the surface of the lens substrate to dye the lens substrate. Preferably, the substrate is immersed in a solution containing a colorant to dye the substrate.

Dyeing can be promoted by immersing the substrate in a solution containing a colorant and heating for a predetermined time.

(Step (3): formation of water-absorbent antifogging layer)

The water-absorbent antifogging layer is formed on at least one of the first main surface and the second main surface of the lens substrate obtained by performing the dyeing treatment.

The water-absorbent antifogging layer is formed by applying a coating composition (in the case of a two-component type, a mixture of two liquids) in which the respective components are dissolved or dispersed in a solvent onto the lens substrate, and drying and curing the coating film at a predetermined temperature.

The application method is not particularly limited, and examples thereof include an air spray method, an airless spray method, an electrostatic coating method, a roll coater method, a flow coater method, a spin coating method, and a dip coating method.

After the application, the coating film is dried and cured at 20 to 160°C for 10 to 120 minutes, preferably at 60 to 120°C for 20 to 90 minutes, and further cooled at normal temperature to obtain a cured film to be the water-absorbent antifogging layer. The temperature and time for drying and curing may be appropriately adjusted in consideration of the

type of solvent, the heat resistance of the lens substrate, and the like.

Note that the above-described functional layer (hard coat layer, primer layer, antireflection layer, and the like) may be formed as necessary.

(Processing step)

Processing such as cutting or grinding of the periphery of the lens is performed as necessary before or after the water-absorbent antifogging layer is formed on at least one of the first main surface and the second main surface of the lens substrate. In this way, a spectacle lens is produced.

## Examples

Next, the present disclosure will be described in more detail by way of Examples, but the present disclosure is not limited in any way by these Examples.

Hereinafter, the present disclosure will be described in more detail with reference to Examples. The hydroxyl value, number average molecular weight (Mn), mass average molecular weight (Mw), and polydispersity index (Mw/Mn) of the components obtained in the following Examples were determined by the following methods. In addition, the measurement of the thickness of the water-absorbent antifogging layer and the light resistance test of the spectacle lenses obtained in Examples and Comparative Examples were performed in the following procedures.

(Hydroxyl value)

The hydroxyl value was measured and calculated according to the method specified in "7.1 Neutralization titration method" of JIS K 0070 "Test methods for acid value, saponification value, ester value, iodine value, hydroxyl value and unsaponifiable matter of chemical products".

The value of the acid value used for calculating the hydroxyl value was measured and calculated according to the method specified in "3.1 Neutralization titration method" of the JIS standard described above.

(Number average molecular weight (Mn), mass average molecular weight (Mw), polydispersity index (Mw/Mn))

The number average molecular weight, mass average molecular weight, and polydispersity index were measured and calculated by gel permeation chromatography (GPC). The apparatus, conditions, and the like used are as follows.

· Equipment used: HLC-8220GPC (manufactured by Tosoh Corporation)
Column used: TSKgel SuperHZM-M, TSKgel GMHXL-H, TSKgel G2500HXL, TSKgel G5000HXL (manufactured by Tosoh Corporation)
· Column temperature: 40°C
Standard substance: TSKgel standard polystyrene A1000, A2500, A5000, F1, F2, F4, F10 (manufactured by Tosoh Corporation)
· Detector: RI (refractive index) detector
· Eluent: tetrahydrofuran
· Flow rate: 1 ml/min

(Thickness of water-absorbent antifogging layer)

The thickness of the water-absorbent antifogging layer was measured using a non-contact film thickness measurement system FF8 manufactured by SystemRoad Co., Ltd.

(Spectral transmittance of water-absorbent antifogging layer)

As a measurement substrate, a thiourethane-based plastic lens MERIA (manufactured by HOYA Corporation, refractive index: 1.60, power: S-4.00D, thickness: 1.0 mm, outer diameter: 75 mm) not containing an ultraviolet absorber having a light transmittance at 350 to 460 nm of 85% or more therein was used. A water-absorbent antifogging layer was formed on the measurement substrate in accordance with the procedure shown in Examples or Comparative Examples described later. Then, the spectral transmittance of each measurement substrate having the water-absorbent antifogging layer was measured using an ultraviolet-visible near-infrared spectrophotometer UH4150 manufactured by Hitachi High-Tech Science Corporation to determine the spectral transmittance of the water-absorbent antifogging layer.

(Light resistance test)

In accordance with the radiation resistance test specified in JIS T7333 6.5 and 7.7, each sample was irradiated with light for 50 hours, and the luminous transmittance before and after the light irradiation was measured using an ultraviolet-visible near-infrared spectrophotometer UH4150 manufactured by Hitachi High-Tech Science Corporation. In addition, in Example 1 and Comparative Example 2 described later, the chromaticity and lightness before and after light irradiation were calculated from the measurement result of the ultraviolet-visible near-infrared spectrophotometer UH4150 manufactured by Hitachi High-Tech Science Corporation.

[Example 1]

(Synthesis of (meth)acrylic resin)

Into a 500 ml-flask equipped with a stirrer, a thermometer, a condenser, and a nitrogen gas inlet tube, 150 parts by mass of propylene glycol monomethyl acetate (PGMAC) was charged, and the temperature was raised to 110°C.

Separately, 25 parts by mass of dimethylacrylamide (DMAA), 35 parts by mass of polycaprolactone-modified hydroxyethyl acrylate (PLACCEL FA2D, manufactured by Daicel Corporation), 10 parts by mass of 2-hydroxylethyl methacrylate (HEMA), 5 parts by mass of polydimethylsiloxane modified with methacrylate at one terminal (Silaplane FM-0721, manufactured by JNC Corporation, molecular weight: 5,000), 25 parts by mass of methyl methacrylate, and 1 part by mass of 1,1'-azobis(cyclohexane-1-carbonitrile) (V-40, manufactured by Wako Pure Chemical Industries, Ltd.) were mixed. The mixed monomer was added dropwise to the 500 ml-flask over 2 hours with stirring, and reacted for 5 hours.

The heating was stopped and the mixture was cooled to room temperature to obtain a resin solution containing a (meth)acrylic resin (solid content ratio: about 40 mass%).

The obtained (meth)acrylic resin had a hydroxyl value of 57 mgKOH/g, a number average molecular weight (Mn) of 12,000, a mass average molecular weight (Mw) of 44,000, and a polydispersity index (Mw/Mn) of 3.67. The glass transition temperature (Tg) of the (meth)acrylic resin calculated from the blending ratio of the used monomers based on the above Fox's equation was 32.8°C.

(Preparation of coating composition)

The (meth)acrylic resin obtained above (100 parts by mass), 30 parts by mass of polycaprolactone diol (PLACCEL 205U, manufactured by Daicel Corporation, molecular weight: 530, hydroxyl value: 207 to 217 mgKOH/g), and 23.5 parts by mass of a polyfunctional isocyanate compound (24A-100, manufactured by Asahi Kasei Corporation, biuret type hexamethylene diisocyanate, isocyanate group content: 23.5 mass%, solid content: 100 mass%) were mixed. Then, the solid content concentration of the mixture was adjusted with PGMAC to prepare a composition having a solid content of 30 mass%.

The amount of the (meth)acrylic resin does not represent the amount as a resin solution (solid content ratio: about 40 mass%), but represents the amount of the resin (solid content) contained in the resin solution. The amount of the polyfunctional isocyanate compound also represents the amount as a solid content.

The measured value of the hydroxyl value of the mixture when the (meth)acrylic resin and the polyol compound were uniformly mixed in the above amounts was 93 mgKOH/g.

An ultraviolet absorber: 2-(2,4-dihydroxyphenyl)-2H-benzotriazole (CAS No. 22607-31-4) was added and mixed to the composition in an amount of 2 mass% based on the total mass of the coating composition, to prepare a coating composition containing an ultraviolet absorber.

(Formation of water-absorbent antifogging layer)

A thiourethane-based plastic lens MERIA (manufactured by HOYA Corporation, refractive index: 1.60, power: S-4.00D, thickness: 1.0 mm, outer diameter: 75 mm) was used as a substrate, and the plastic lens was colored according to the following procedure. First, to 1,000 ml of pure water were added and mixed (i) 2.15 g of a blue dye (AUL-S manufactured by Futaba Sangyo Co., Ltd.), 0.38 g of a red dye (BL manufactured by Futaba Sangyo Co., Ltd.), 0.31 g of a brown dye (SN manufactured by Futaba Sangyo Co., Ltd.), and 0.18 g of a yellow dye (YLSE manufactured by Kiwa Chemical Industry Co., Ltd.), and (ii) 100 ml of a material obtained by diluting 78 g of dioxybenzone (CAS No. 131-53-3) as a carrier material with 10 L of pure water to prepare a dyeing immersion liquid. The plastic lens was immersed in the dyeing immersion liquid, dyed at 92°C for 60 minutes, and then annealed at 115°C for 30 minutes to color the plastic lens in gray.

Using the plastic lens thus colored in gray as a substrate, the coating composition was applied onto the substrate

by a dip coating method, and heated at 120°C for 2 hours to cure the coating film, thereby forming a single water-absorbent antifogging layer on the substrate. The thickness of the water-absorbent antifogging layer was 11.3 um.

In the substrate on which the water-absorbent antifogging layer had been formed, the light transmittance at 350 to 370 nm was less than 5%, and the wavelength at which the light transmittance reached 5% was 373.7 nm.

[Example 2]

A single-layer water-absorbent antifogging layer was formed in the same manner as in Example 1 except that 2,2',4,4'-tetrahydroxybenzophenone (CAS No. 131-55-5) was used as an ultraviolet absorber and the blending amount thereof was 3 mass% based on the total mass of the coating composition, and a spectacle lens was produced.

The thickness of the water-absorbent antifogging layer was 12.6 um.

In the water-absorbent antifogging layer, the light transmittance at 350 to 370 nm was less than 5%, and the wavelength at which the light transmittance reached 5% was 382.1 nm.

[Comparative Example 1]

A spectacle lens was produced in the same manner as in Example 1 except that 2,2'-dihydroxy-4-methoxybenzophenone (CAS No. 131-53-3) was used as an ultraviolet absorber, and the blending amount thereof was 3 mass% based on the total mass of the coating composition.

The thickness of the water-absorbent antifogging layer was 12.8 um.

In the water-absorbent antifogging layer, the light transmittance at 350 to 360 nm was less than 5%, and the wavelength at which the light transmittance reached 5% was 363.1 nm.

[Comparative Example 2]

A spectacle lens was produced in the same manner as in Example 1 except that the composition before adding an ultraviolet absorber was used as a coating composition.

The thickness of the water-absorbent antifogging layer was 12.4 um.

The light transmittance of the water-absorbent antifogging layer at 350 to 420 nm was more than 80%.

The results of the light resistance test of Examples 1 and 2 and Comparative Examples 1 and 2 are shown in Table 1. For Example 1 and Comparative Example 2, the results of measuring the lightness and chromaticity before and after the light resistance test are shown in Table 2. In the water-absorbent antifogging layer of Comparative Example 2, the light transmittance of the water absorbent antifogging layer always exceeds 5% at least at 350 to 420 nm, and therefore "-" is written in the column of "wavelength at which light transmittance reaches 5%" in Tables 1 and 2.

[Table 1]

Table 1

| | Wavelength at which light transmittance reaches 5% (nm) | Luminous transmittance (%) | | |
|---|---|---|---|---|
| | | Before light irradiation | After 50 h irradiation | Change |
| Example 1 | 373.7 | 70.48 | 72.57 | 2.09 |
| Example 2 | 282.1 | 68.57 | 69.17 | 0.60 |
| Comparative Example 1 | 363.1 | 68.20 | 73.00 | 4.80 |
| Comparative Example 2 | - | 68.33 | 71.04 | 2.72 |

[Table 2]

Table 2

| | Wavelength at which light transmittance reaches 5% (nm) | Lightness/ chromaticity | Before light irradiation | After 50 h irradiation |
|---|---|---|---|---|
| Example 1 | 373.7 | L* | 87.30 | 88.10 |
| | | a* | -0.10 | 0.30 |
| | | b* | 1.30 | 0.60 |
| Comparative Example 2 | - | L* | 86.20 | 87.54 |
| | | a* | 0.10 | -1.58 |
| | | b* | 1.34 | 10.48 |

As is apparent from Table 1, in the lenses of Examples 1 and 2, the increase in luminous transmittance after light irradiation is suppressed as compared with Comparative Examples 1 and 2, and these results show that the dyed lens is hardly discolored. In particular, the results show that the increase in luminous transmittance is suppressed to be low in Example 2.
In addition, Table 2 reveals that the lens of Example 1 has no significant change in chromaticity (values of a* and b*) and no significant change in color even after light irradiation. On the other hand, Table 2 also shows that in the lens of Comparative Example 2, which does not contain an ultraviolet absorber, the value of b* after light irradiation greatly increases, and the lens has a tinge of yellow by light irradiation.
Finally, the embodiment of the present disclosure will be summarized.
The spectacle lens according to the embodiment of the present disclosure includes: a substrate having a first main surface and a second main surface; a water-absorbent antifogging layer that is composed of a single layer and is formed on a side of the second main surface of the substrate; a light transmissive hard layer formed on the first main surface of the substrate; and a hydrophilic antifogging layer formed on the light transmissive hard layer.
According to the above-described embodiment, it is possible to provide a spectacle lens excellent in antifogging properties and scratch resistance.
Each embodiment disclosed herein is an example in every respect and should not be restrictively understood. The scope of the present disclosure is defined not by the above description but by claims, and intends to include all modifications within meaning and a scope equal to claims.
In the present disclosure, as for the examples of components, contents, and physical properties, matters exemplified or described as a preferable range in the detailed description of the invention may be combined with each other arbitrarily.
In addition, by adjusting the composition described in Examples so as to be the composition described in the detailed description of the invention, the embodiment in the present disclosure can be performed in a similar manner to Examples in the entire claimed composition range.

Reference Signs List

10 Spectacle lens
11 Substrate
11a, 11b Dyed region
20, 21 Water-absorbent antifogging layer

## Claims

1. A spectacle lens comprising: a substrate; and a water-absorbent antifogging layer provided as an outermost layer on the substrate, wherein

    the water-absorbent antifogging layer contains an ultraviolet absorber, and
    the water-absorbent antifogging layer has spectral characteristics in which a light transmittance at least at 350 to 370 nm is less than 5%, and a wavelength at which the light transmittance is 5% or more is 370 nm or more.

**2.** The spectacle lens according to claim 1, wherein the water-absorbent antifogging layer is formed of a cured film of a coating composition containing the following components (A) to (C):

Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

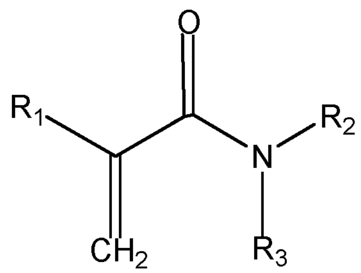

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 2]

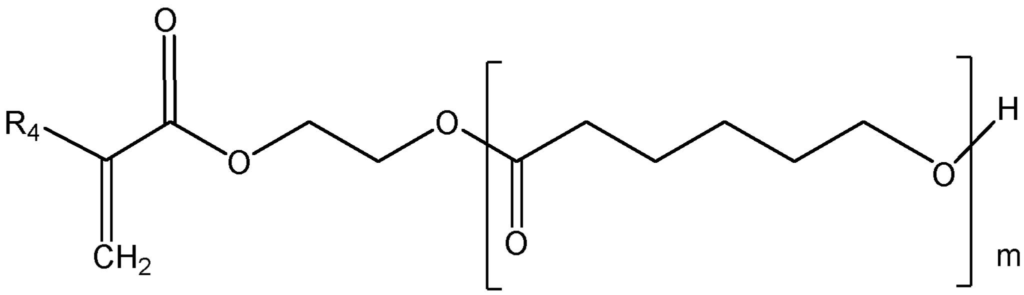

(2)

wherein $R_4$ is a hydrogen atom or a methyl group, and m is an integer of 1 to 5, and

[Chemical Formula 3]

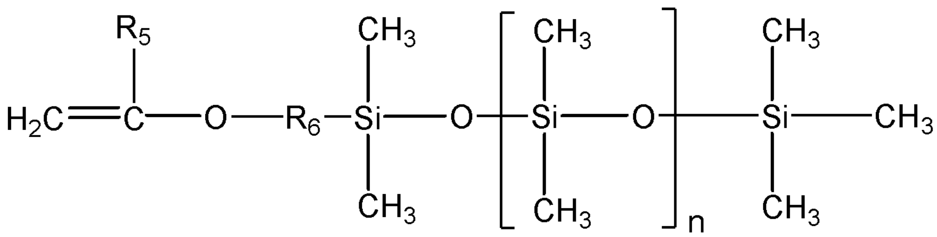

(3)

wherein $R_5$ is a hydrogen atom or a methyl group, $R_6$ is a divalent organic group, and n is 0 or an integer of 1 or more.

**3.** The spectacle lens according to claim 1 or 2, wherein the ultraviolet absorber contains a compound represented by the following general formula (4):

[Chemical Formula 4]

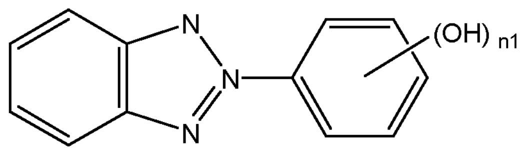

(4)

wherein n1 is 2 or 3.

**4.** The spectacle lens according to claim 1 or 2, wherein the ultraviolet absorber contains a compound represented by the following general formula (5):

[Chemical Formula 5]

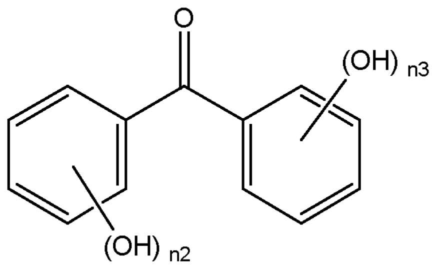

(5)

wherein n2 is 2 or 3, and n3 is 2 or 3.

**5.** The spectacle lens according to any one of claims 1 to 4, wherein the substrate is dyed with a colorant.

**6.** The spectacle lens according to claim 5, wherein the substrate is dyed in gray.

**7.** The spectacle lens according to any one of claims 1 to 6, wherein the substrate is made of resin.

FIG. 1

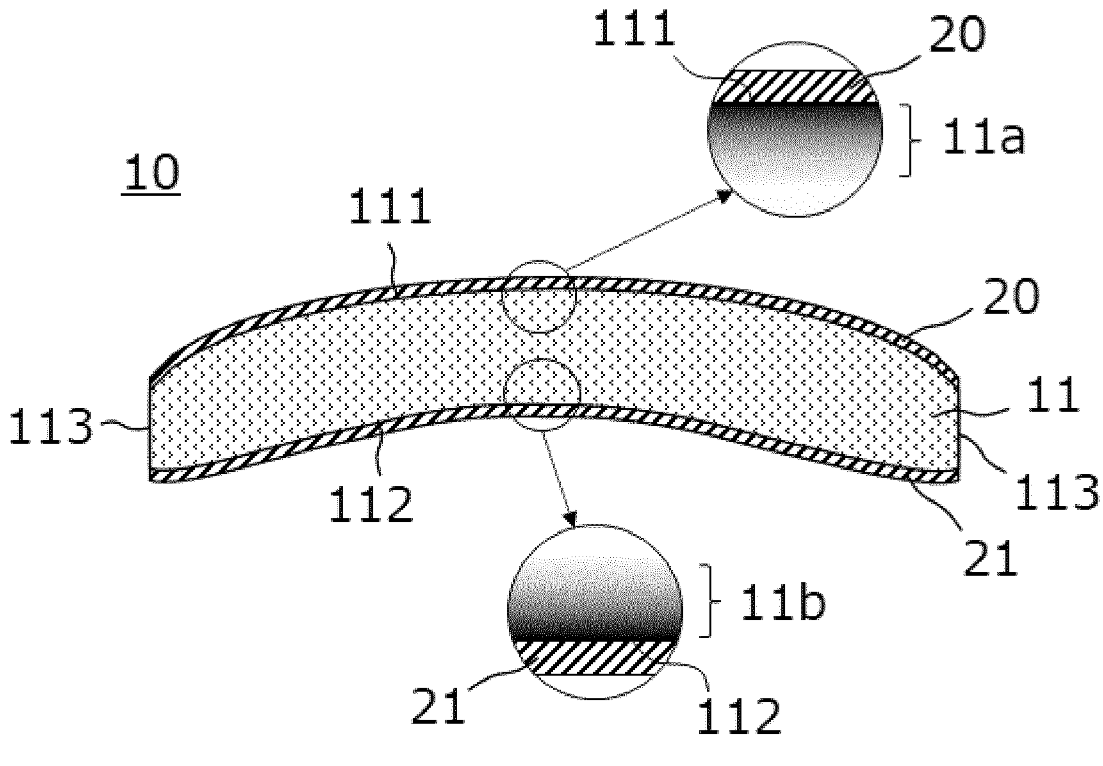

**INTERNATIONAL SEARCH REPORT**

International application No.
**PCT/JP2022/016492**

**A. CLASSIFICATION OF SUBJECT MATTER**

***G02C 7/00***(2006.01)i; ***C09K 3/18***(2006.01)i; ***G02B 1/18***(2015.01)i; ***G02B 5/22***(2006.01)i
FI: G02C7/00; G02B5/22; G02B1/18; C09K3/18 104

According to International Patent Classification (IPC) or to both national classification and IPC

**B. FIELDS SEARCHED**

Minimum documentation searched (classification system followed by classification symbols)

G02C7/00; C09K3/18; G02B1/18; G02B5/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-94468 A (NATOKO KK) 20 June 2019 (2019-06-20) paragraphs [0011], [0074], [0087] | 1-7 |
| Y | WO 2018/143329 A1 (NIKON ESSILOR CO LTD) 09 August 2018 (2018-08-09) paragraphs [0009]-[0016], [0028] | 1-7 |
| Y | WO 2020/262658 A1 (HOYA LENS THAILAND LTD) 30 December 2020 (2020-12-30) paragraphs [0007], [0027]-[0032], [0063], [0071] | 3-4 |
| Y | JP 50-137557 A (HOYA LENS KK) 31 October 1975 (1975-10-31) p. 2, upper right column, line 18 to p. 3, upper left column, line 8, fig. 2 | 6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/016492**

| Patent document cited in search report | Publication date (day/month/year) | Patent family member(s) | Publication date (day/month/year) |
|---|---|---|---|
| JP 2019-94468 A | 20 June 2019 | JP 6340539 B1 | |
| WO 2018/143329 A1 | 09 August 2018 | (Family: none) | |
| WO 2020/262658 A1 | 30 December 2020 | JP 2021-6600 A | |
| JP 50-137557 A | 31 October 1975 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013005710 A


### Non-patent literature cited in the description


- *CHEMICAL ABSTRACTS,* 22607-31-4
- *CHEMICAL ABSTRACTS,* 131-55-5
- *CHEMICAL ABSTRACTS,* 131-53-3